# EUROPEAN PATENT APPLICATION

(11) **EP 4 810 308 A1**
(43) Date of publication of application: **23.09.2026**
(21) Application number: 25774950.7
(22) Date of filing: 13.03.2025
(51) Int. Cl.: B60L 53/35, B60L 53/57, B60L 53/66, B60L 53/30, H02J 50/10, B25J 11/00, B25J 5/00, B25J 13/08, B25J 9/16, B25J 13/00

(54) **ROBOT CHARGING SYSTEM FOR ELECTRIC VEHICLE BASED ON AUTONOMOUS MOBILE ROBOT**

(30) Priority: 18.03.2024 KR 20240037458; 12.11.2024 KR 20240160107
(71) Applicant: Hyundai Motor Company, Seoul 06797 (KR); Kia Corporation, Seoul 06797 (KR)
(72) Inventor: JANG, Jin Su, Hwaseong-si, Gyeonggi-do 18280 (KR); KANG, Yeong Ju, Hwaseong-si, Gyeonggi-do 18280 (KR); KIM, Sung Kyu, Hwaseong-si, Gyeonggi-do 18280 (KR); KIM, Gyu Tae, Hwaseong-si, Gyeonggi-do 18280 (KR)
(74) Representative: Isarpatent
(86) International application number: PCT/KR2025/099763
(87) International publication number: WO 2025/198442

(57) **Abstract**

Disclosed is a charging robot for charging a chargeable mobility. The robot comprises: a driving module that operates to move to a target position for charging the mobility while being separated from a primary device of a station; a manipulator that operates to couple a first power interface of the robot to a second power interface of the mobility in order to charge the mobility at the target position; and a controller that controls the operation of at least one of the first power interface, the driving module, or the manipulator.

## Description

### [Technical Field]

The present disclosure relates to a charging technology based on an automatic connection device (ACD) for charging an electric vehicle (EV), and more particularly, to a robotic charging technology for charging an electric vehicle and a robotic charging system for an electric vehicle based on an autonomous mobile robot.

### [Background Art]

The contents described in this section merely provide background information on the present disclosure and do not constitute the prior art.

Recently developed electric vehicles (EVs) drive motors using battery power, and have advantages such as fewer air pollutants including exhaust gas and noise compared to conventional gasoline engine vehicles, fewer failures, long service life, and simple driving operation.

Electric vehicles may be classified into a hybrid electric vehicle (HEV), a plug-in hybrid electric vehicle (PHEV), and an electric vehicle (EV) depending on driving sources. An HEV includes an engine as a main power source and a motor as an auxiliary power source. A PHEV includes a motor as a main power source and an engine used when the battery is discharged. An EV includes a motor but does not include an engine.

An electric vehicle charging system may basically be defined as a system for charging a battery mounted in an electric vehicle by using power of a power distribution grid or an energy storage device. The electric vehicle charging system may have various forms depending on the type of electric vehicle. For example, the electric vehicle charging system may include a conductive charging system using a cable or a contactless wireless power transfer system.

During charging of an electric vehicle, a vehicle assembly (VA) mounted in the electric vehicle may form inductive resonant coupling with a transmission pad of a ground assembly (GA) located at a charge station or charging spots. The electric vehicle may charge its battery by using power delivered from the ground assembly through the inductive resonant coupling.

A robot arm or a manipulator may be used to supply power from an electric vehicle supply equipment (EVSE) to an electric vehicle charger.

In this case, considering various types of electric vehicle charger, various types of electric vehicle supply equipment, and various charging methods, it is necessary to define procedures for positioning between an electric vehicle and a manipulator and procedures for a preparation stage for supplying power.

### [Disclosure]

### [Technical Problem]

The present disclosure proposes an electric vehicle charging robot, a robotic charging system, and a charging method using the electric vehicle charging robot and the robotic charging system, which use an autonomous mobile robot (AMR, Autonomous Mobile Robot) in a system for supplying power from a power supply device or an electric vehicle supply equipment (EVSE, Electric Vehicle Supply Equipment) to an electric vehicle.

The present disclosure proposes an electric vehicle charging robot, a robotic charging system, and a charging method that are interworked with an electric vehicle equipped with an in-vehicle wireless communication controller (EVCC).

The present disclosure proposes a charging infrastructure for an AMR-based electric vehicle charging robot, a robotic charging system, and a charging method.

The present disclosure proposes a communication procedure and a charging procedure for an AMR-based electric vehicle charging robot, a robotic charging system, and a charging method.

### [Technical Solution]

According to an aspect of an exemplary embodiment, a charging robot based on autonomous driving for charging an electric vehicle, a chargeable mobility or device (hereinafter, "mobility") may include a first power interface configured to supply power to a second power interface of the mobility, a traveling module configured to operate such that the charging robot moves to a target location for charging the mobility in a state in which the charging robot is separated from an electric vehicle supply equipment (EVSE) or a primary device of a station, a manipulator configured to operate such that the first power interface and the second power interface are docked or coupled at the target location, and a controller configured to control one or more operations of the first power interface, the traveling module, or the manipulator.

In the charging robot for charging the mobility according to an exemplary embodiment of the present disclosure, the manipulator may include one or more of a sidearm mechanism configured to dock or couple with the second power interface at a side of the mobility, an underbody mechanism configured to dock or couple with the second power interface under the mobility, or a roof or pantograph mechanism configured to dock or couple with the second power interface above the mobility.

The traveling module may operate such that the charging robot moves to the target location through autonomous driving under control of the controller.

The first power interface may provide a bidirectional charging function including a grid-to-vehicle (G2V) charging mode for supplying power to the second power interface, and a vehicle-to-grid (V2G) charging mode for receiving power from the second power interface.

The charging robot for charging the mobility according to an exemplary embodiment of the present disclosure may further include an energy storage device, and the controller may store power supplied from the EVSE or the primary device of the station in the energy storage device in a state in which the charging robot is docked or coupled with the EVSE or the primary device, and may control the first power interface and the energy storage device such that power is supplied from the energy storage device to the second power interface through the first power interface in a state in which the charging robot has moved to the target location.

The charging robot for charging the mobility according to an exemplary embodiment of the present disclosure may further include an energy storage device and a third power interface configured to receive power from a ground power supply device disposed on a ground and to transfer the power to the energy storage device in a state in which the charging robot has moved to the target location.

The controller may control the first power interface and the third power interface such that power is transmitted to the second power interface through the first power interface while power is received from the ground power supply device through the third power interface.

The controller may obtain a location of the ground power supply device such that the third power interface is coupled with the ground power supply device, and may control the third power interface such that the third power interface is aligned with the location of the ground power supply device.

In the charging robot for charging the mobility according to an exemplary embodiment of the present disclosure, the controller may control one or more of selection of the charging robot, movement of the charging robot to the target location, or power supply through the first power interface based on an input of a user.

According to an aspect of an exemplary embodiment, a robotic charging system for charging an electric vehicle, a chargeable mobility or device (hereinafter, "mobility"), may include an EVSE or a primary device of a station, and a charging robot configured to move to a target location for charging the mobility in a state in which the charging robot is separated from the EVSE or the primary device.

In the robotic charging system according to an exemplary embodiment of the present disclosure, the charging robot may include a traveling module, a manipulator configured to operate such that a first power interface of the charging robot and a second power interface of the mobility are docked or coupled at the target location, and a controller configured to control one or more operations of the first power interface, the traveling module, or the manipulator.

In the robotic charging system according to an exemplary embodiment of the present disclosure, the manipulator may include one or more of a sidearm mechanism configured to dock or couple with the second power interface at a side of the chargeable mobility or device, an underbody mechanism configured to dock or couple with the second power interface under the chargeable mobility or device, or a roof or pantograph mechanism configured to dock or couple with the second power interface above the chargeable mobility or device.

In the robotic charging system according to an exemplary embodiment of the present disclosure, the charging robot may provide a bidirectional charging function including a grid-to-vehicle (G2V) charging mode for supplying power from the first power interface to the second power interface, and a vehicle-to-grid (V2G) charging mode for receiving power from the second power interface to the first power interface.

The robotic charging system according to an exemplary embodiment of the present disclosure may further include a ground power supply device disposed on a ground to supply power to the charging robot.

The robotic charging system according to an exemplary embodiment of the present disclosure may further include a marker disposed on a ground to indicate a location of the ground power supply device as a charging infrastructure.

According to an aspect of an exemplary embodiment, a mobility charging method using a charging robot for charging an electric vehicle, a chargeable mobility or device (hereinafter, "mobility"), may include moving a charging robot including a first power interface configured to supply power to a second power interface of the mobility to a target location for charging the mobility by traveling after being separated from an electric vehicle supply equipment (EVSE) or a primary device of a station, controlling a manipulator of the charging robot such that the first power interface and the second power interface are docked or coupled at the target location in order to charge the mobility, and transmitting power between the first power interface and the second power interface.

In the mobility charging method using the charging robot according to an exemplary embodiment of the present disclosure, the manipulator may include one or more of a sidearm mechanism configured to dock or couple with the second power interface at a side of the chargeable mobility or device, an underbody mechanism configured to dock or couple with the second power interface under the chargeable mobility or device, or a roof or pantograph mechanism configured to dock or couple with the second power interface above the chargeable mobility or device.

In the transmitting of the power between the first power interface and the second power interface, the power may be transmitted in one of a grid-to-vehicle (G2V) charging mode for supplying power to the second power interface or a vehicle-to-grid (V2G) charging mode for receiving power from the second power interface.

The mobility charging method using the charging robot according to an exemplary embodiment of the present disclosure may further include storing power supplied from the EVSE or the primary device of the station in a state in which the charging robot is docked or coupled with the EVSE or the primary device before the charging robot is separated from the EVSE or the primary device.

The mobility charging method using the charging robot according to an exemplary embodiment of the present disclosure may further include supplying power from a ground power supply device disposed on a ground to the charging robot in a state in which the charging robot has moved to the target location.

The mobility charging method using the charging robot according to an exemplary embodiment of the present disclosure may further include selecting the charging robot based on an input of a user.

In the mobility charging method using the charging robot according to an exemplary embodiment of the present disclosure, one or more of moving the charging robot to the target location, controlling the manipulator of the charging robot, or transmitting power between the first power interface and the second power interface may be controlled based on the input of the user.

According to exemplary embodiments of the present disclosure, an electric vehicle charging robot, a robotic charging system, and a charging method using the electric vehicle charging robot and the robotic charging system, which use an autonomous mobile robot (AMR), may be implemented in a system for supplying power from a power supply device or an electric vehicle supply equipment (EVSE) to an electric vehicle.

According to exemplary embodiments of the present disclosure, an electric vehicle charging robot, a robotic charging system, and a charging method that are interworked with an electric vehicle equipped with an in-vehicle wireless communication controller (EVCC) may be implemented.

According to exemplary embodiments of the present disclosure, a charging infrastructure for an AMR-based electric vehicle charging robot, a robotic charging system, and a charging method may be implemented.

According to exemplary embodiments of the present disclosure, a communication procedure and a charging procedure for an AMR-based electric vehicle charging robot, a robotic charging system, and a charging method may be implemented.

### [Description of Drawings]

FIG. 1 is a diagram conceptually illustrating an example of a system including a charging infrastructure for transmitting power to an electric vehicle.
FIG. 2 is a diagram conceptually illustrating a process in which a charging robot according to an exemplary embodiment of the present disclosure operates to charge a vehicle or mobility and a charging infrastructure in which the process is performed.
FIG. 3 is a diagram conceptually illustrating an example of an ACD-U based interface in which a charging robot according to an exemplary embodiment of the present disclosure operates to charge a vehicle or mobility.
FIG. 4 is a diagram conceptually illustrating an example of an ACD-S based interface in which a charging robot according to an exemplary embodiment of the present disclosure operates to charge a vehicle or mobility.
FIG. 5 is a block diagram conceptually illustrating a system structure of a charging robot according to an exemplary embodiment of the present disclosure.
FIG. 6 is a diagram conceptually illustrating an example in which a manipulator of a charging robot according to an exemplary embodiment of the present disclosure operates to charge a vehicle or mobility.
FIG. 7 is a diagram conceptually illustrating an example in which a manipulator of a charging robot according to an exemplary embodiment of the present disclosure operates to charge a vehicle or mobility.
FIG. 8 is a block diagram conceptually illustrating a system structure of a charging station for mutually cooperating with a charging robot according to an exemplary embodiment of the present disclosure.
FIG. 9 is an operation flowchart illustrating a mobility charging method based on an autonomous mobile robot according to an exemplary embodiment of the present disclosure.
FIG. 10 is an operation flowchart illustrating in detail a part of a process of the mobility charging method based on the autonomous mobile robot according to an exemplary embodiment of the present disclosure.
FIG. 11 is an operation flowchart illustrating in detail a part of a process of the mobility charging method based on the autonomous mobile robot according to an exemplary embodiment of the present disclosure.
FIG. 12 is a diagram conceptually illustrating a service providing process for mobility charging based on an autonomous mobile robot according to an exemplary embodiment of the present disclosure.
FIG. 13 is an operation flowchart conceptually illustrating a charging robot control process for mobility charging based on an autonomous mobile robot according to an exemplary embodiment of the present disclosure.
FIG. 14 is an operation flowchart illustrating in detail an exemplary embodiment of a part of the process of FIG. 13.
FIG. 15 is an operation flowchart illustrating in detail another exemplary embodiment of a part of the process of FIG. 13.
FIG. 16 is an operation flowchart illustrating in detail another exemplary embodiment of a part of the process of FIG. 13.
FIG. 17 is a diagram conceptually illustrating a communication sequence for mobility charging based on an autonomous mobile robot according to an exemplary embodiment of the present disclosure.
FIG. 18 is a block diagram illustrating a generalized configuration illustrating a computing system configuring or controlling one or more of a charging robot, a charging station, a primary device, a wired/wireless power transmission device, a wired/wireless power reception device, or a chargeable mobility or device according to an exemplary embodiment of the present disclosure.

### [Best mode of the Invention]

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure. In the description of each drawing, like reference numerals refer to like components.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC)" or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted in the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted in the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted in the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"Original Equipment Manufacturer (OEM)": A server operated by a producer who manufactures the EV and may refer to a Root Certification Authority (RootCA) issuing an OEM RootCA Certificate.

"Charging station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charging station (CS)" may refer to a facility that includes one or more EV power supply devices and may actually perform charging for an electric vehicle.

The charging station may include at least one GA and at least one GA controller configured to manage the at least one GA. The GA may include at least one wireless communication device. The charging station may refer to a place or location including at least one GA, which is provided in home, office, public place, road, parking area, etc.

"Charging station operator (CSO)": A party responsible for the provisioning and operation of a charging infrastructure and managing electricity to provide a requested energy transfer service. The charging station operator may be a term having a same concept as a charge point operator (CPO).

"Charge Service Provider (CSP)": An entity managing and authenticating EV user's credentials and providing the billing and other value-added services to customers. The CSP may be considered as a special type of the mobility operator (MO) and may be integrated with the MO.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

In addition, "mobility operator (MO)" may refer to a service provider that enters into a contractual relationship with an EV owner regarding charging, authorization, and payment so that an EV driver may charge the electric vehicle at a charging station.

"Clearing House (CH)": An entity handling cooperation between the MOs, CSPs, and CSOs. In particular, the clearing house may perform a role of an intermediate actor facilitating authorization, billing, and settling procedure for the EV charging service roaming, between two clearing parties.

"Roaming": Information changes and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (eMAID)" may refer to a unique identifier of an electric mobility that associates a contract certificate with a payment account of an EV owner.

"E-Mobility Account Identifier (EMAID)": A single contractual certificate issued for each legal contract concluded between the mobility operator and a customer for the electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

The V2G communication interface and the ISO 15118 standard may be intended to enable a user-friendly mechanism for performing an authentication, authorization, and payment at the charging station without requiring a separate user interaction.

An electric vehicle may be integrated into the smart grid to provide a flexible load control and valuable grid services without compromising driver habits. To avoid the need for additional grid components to supply power during a peak demand caused by a variety of load fluctuations, the energy stored in the electric vehicle may be considered as one of energy sources in the smart grid. Furthermore, in order to encourage the long-term expansion of renewable energy sources, providing appropriate incentives to the electric vehicles may also be considered as a means to activate the smart grid.

The vehicle-to-grid transfer protocol of the OSI layer 5 ("V2GTP") may be understood as a session wrapper of application-layer messages exchanged between a vehicle and a grid. The application-layer messages at this time may be referred to as V2G messages. The V2GTP protocol may include a header and a payload definition that enable efficient differentiation and processing of V2G messages.

Autoconnect charging device or automatic charging device ("ACD") technology may be implemented based on the contents specified in ISO/IEC 15118 Edition 2 and ISO 15118-20, in which at least a portion of a charging process is performed by controlling a robot or an automated device by using wireless communication.

As exemplary embodiments of the ACD technology, types such as ACD-U (Underbody), ACD-S (Sidearm), ACD-P (Pantograph) or ACD-R (Roof) may be proposed based on an approaching direction of an ACD facility of an EVSE toward an electric mobility and/or based on a position of the EVSE-side ACD facility relative to the electric mobility. Additional ACD types may be included in the future with the expansion of wired or wireless charging technologies.

The ACD charging and the charging communication method for the ACD charging described below may define a new namespace for ISO 15118-based ACD charging communication over WLAN, may change message parameters, may change message sequences, and may be configured to use a docking-undocking-pairing mechanism. The ACD charging communication method may also be configured to define VSE additional-information parameters for ACD-U, ACD-S, ACD-P or ACD-R.

Vendor specific element ("VSE") may refer to a data format that includes information about a type of an EVSE available at a current location in ISO 15118-based communication.

For convenience of description in the present disclosure, when exemplary embodiments including an electric vehicle, a charging station for the electric vehicle, and an electric vehicle supply equipment (EVSE) of the charging station are described as main exemplary embodiments, technical features of the exemplary embodiments may be modified and applied to a chargeable mobility or device, a charging station for the chargeable mobility or device, and a power supply equipment of the charging station in alternative exemplary embodiments of the present disclosure.

Hereinafter, preferred exemplary embodiments according to the present disclosure will be described in detail with reference to the accompanying drawings.

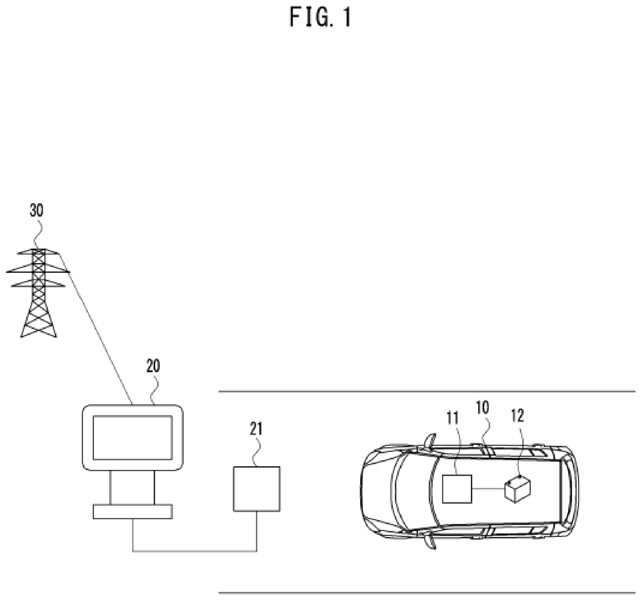

FIG. 1 is a diagram conceptually illustrating an example of a system including a charging infrastructure for transmitting power to an electric vehicle.

As shown in FIG. 1, a charging process of an electric vehicle 10 may be performed by one or more of the electric vehicle 10 or a charging station, and may be used to wirelessly or wiredly transmit power to the electric vehicle 10.

The electric vehicle 10 according to exemplary embodiments of the present disclosure may include a hybrid vehicle having both an electric motor and a general internal combustion engine, and may include not only an automobile but also a motorcycle, a cart, a scooter, and an electric bicycle.

Here, the electric vehicle 10 may be generally defined as an automobile that supplies a current derived from a chargeable energy storage device such as a battery 12 as an energy source of an electric motor that is a power device.

In addition, the electric vehicle 10 may include a power reception device/pad 11 including a reception coil so as to wirelessly charge the battery 12, and may also include a plug connector so as to wiredly charge the battery 12. The electric vehicle 10 capable of wiredly charging the battery 12 may be referred to as a plug-in electric vehicle (PEV).

Here, the charging station may be connected to a power grid 30 or a power backbone, and may provide alternating current (AC) power or direct current (DC) power to a power transmission device/pad 21 including a transmission coil through a power link.

In addition, the charging station may communicate with a power grid 30, an infrastructure management system managing the power grid 30, or an infrastructure server through wired/wireless communication, and may perform wireless communication with the electric vehicle 10. Here, the wireless communication may include Bluetooth, zigbee, cellular, a wireless local area network (WLAN), and so on.

In addition, for example, the charging station may be positioned at various places such as a parking lot attached to a house of an owner of the electric vehicle 10, a parking region for electric vehicle charging at a gas station, or a parking region of a shopping center or a workplace.

Here, a process of wiredly/wirelessly charging the battery 12 of the electric vehicle 10 may be performed by first positioning the power reception device/pad 11 of the electric vehicle 10 in an energy field by the power transmission device/pad 21 and causing a transmission coil of the power transmission device/pad 21 and a reception coil of the power reception device/pad 11 to interact or couple with each other. As a result of the interaction or coupling, an electromotive force is induced in the power reception device/pad 11, and the battery 12 may be charged by the induced electromotive force.

In addition, the charging station and the power transmission device/pad may be referred to in whole or in part as a supply power circuit (SPC) or a ground assembly (GA) 20, and the SPC or the ground assembly may refer to the meaning defined above.

In addition, the power reception device/pad 11 of the electric vehicle 10 and all or part of other internal components of the electric vehicle may be referred to as an EV power circuit (EVPC) or a vehicle assembly (VA), and here, the EVPC or the vehicle assembly may refer to the meaning defined above.

The electric vehicle charging system may include a conductive charging system using a cable or a wireless power transfer system of a non-contact type, but is not limited thereto. The electric vehicle charging system may be basically defined as a system that charges the battery 12 mounted in the electric vehicle 10 using power of the distribution network (grid) 30 of a commercial power source or power of an energy storage device, and such an electric vehicle charging system may have various forms according to a type of the electric vehicle 10.

For example, SAE TIR J2954, which is a representative standard for wireless charging, establishes industry standard specification guidelines defining interoperability, electromagnetic compatibility, minimum performance, safety, and allowable criteria for tests for wireless charging of a light duty electric vehicle and a plug-in electric vehicle. It will be obviously understood by those skilled in the art that similar guidelines may also be applied to a wired charging system.

A wired/wireless charging system of the electric vehicle may largely include the following three elements.
1) a GA coil for power connection, a grid-connected power converter, and a communication link with a vehicle system
2) a VA coil having rectifying and filtering components, charging control power electronics required for regulation/safety/shutdown if necessary, and a communication link with a base station side
3) a secondary energy storage system, battery management system components, and related modules required for in-vehicle communication (CAN, LIN) required for a battery SOC, a charge rate, and other necessary information

In addition, since a VSE Field of a WLAN does not include detailed information such as maximum charging power, in a charging station in which one SECC and a plurality of EVSEs coexist, a user may fail to properly connect to a charger intended for actual charging.

In addition, after WLAN Association of a vehicle with a charger/SECC, a Positioning procedure should be performed for precise alignment between the vehicle and the EVSE, and in the case of wireless power transfer (WPT), if alignment between a vehicle-side pad and an EVSE pad is not properly achieved, charging efficiency is lowered or charging becomes impossible. In addition, when the Positioning is completed, a procedure for checking whether physical connection with the EVSE intended for actual connection is possible is required, and when physical connection between the vehicle and the EVSE intended for charging is impossible, charging also may not proceed, and thus, after WLAN Association, a Pairing procedure should be performed between the vehicle and the EVSE. For this purpose, in the case of wireless charging, a method for Positioning and Pairing using a separate P2PS (Point to Point Signal) is defined in the IEC 61950-2 standard, but in the case of an automatic connection device (ACD)-based robotic charging system, there is room for improvement such as insufficient standard provisions for separate Positioning and Pairing methods.

Power transfer may be performed from a transmission coil/primary coil L1 to a reception coil/secondary coil L2, and a resonance frequency of the transmission coil L1 and a resonance frequency of the reception coil L2 may be configured to be similar or identical to each other, and the reception coil L2 may be configured to be positioned at a short distance in an electromagnetic field generated by the transmission coil L1.

Meanwhile, as the transmission coil L1 and the reception coil L2 are positioned at a long distance, power loss may increase, and thus, setting positions of the transmission coil L1 and the reception coil L2 may be an important factor.

The transmission coil L1 may be included in the power transmission device/pad, and the reception coil L2 may be included in the power reception device/pad. In addition, the transmission coil may also be referred to as a primary coil or a GA coil, and the reception coil may also be referred to as a secondary coil or a VA coil. Therefore, positioning between the power transmission device/pad and the power reception device/pad or positioning between the electric vehicle 10 and the power transmission device/pad is also an important factor.

In FIG. 1, positional alignment between the power transmission device/pad and the power reception device/pad built in the electric vehicle 10 may correspond to the term alignment described above, and thus, may also be defined as positional alignment between the SPC/GA and the EVPC/VA, and is not interpreted as being limited to positional alignment between the power transmission device/pad and the power reception device/pad.

There may be exemplary embodiments in which a separate cover for an inlet that is a charging socket disposed in a vehicle is disposed. When an inlet cover is disposed inside a charging door/port, the inlet cover may be implemented with a plastic or rubber component for insulation.

A charging manipulator may be various types of devices referred to as an ACD (Automated Connection Device, Automatic Charging Device, or Autoconnect Charging Device), or may include an ACD.

Examples of the charging manipulator may also be applied to an ACD-S (Side) type, an ACD-U (Underbody) type, an ACD-P (Pantograph) type, or an ACD-R (Roof) type.

In exemplary embodiments of the present disclosure, an operating range of the charging manipulator may refer to an ACD mating space. In alternative exemplary embodiments of the present disclosure, the operating range of the charging manipulator may refer to a range of a space in which a movable distance of the charging manipulator and the ACD mating space are combined.

In exemplary embodiments of the present disclosure, a process of identifying a type and specifications of the electric vehicle 10 may be included. A mating possibility may also be determined by adjusting the operating range of the charging manipulator in consideration of an operating range of a manipulator, etc. on a side of the electric vehicle 10 that is an ACD counterpart.

The charging system of FIG. 1 may use one or more of wired power transfer or wireless power transfer. The ACD-based charging system of FIG. 1 may support wired charging or wireless charging regardless of ACD-U, ACD-S, ACD-P, or ACD-R.

When the charging system of FIG. 1 is a wireless power transfer system, the charging system is generally known to use inductive coupling, and a power transfer system according to an exemplary embodiment of the present disclosure may adopt a configuration in which power is transferred by inductive coupling on the premise of an environment in which a gap between a transmission pad and a reception pad is controlled within a predetermined range. The configuration of FIG. 1 may be used within a range corresponding to the object of the present disclosure, and may be selectively used or appropriately modified according to necessity.

In ISO 15118-8, which is an international standard related to wireless communication for electric vehicle charging, a vehicle is allowed to connect to a charger AP rather than a general AP through a VSE (Vendor Specific Element) Field of a MAC Frame corresponding to Layer 2 of OSI 7 Layer. However, since information on Positioning and Pairing is not properly defined in the VSE Field of the charger/SECC except for wireless power transfer (WPT), various positioning and communication techniques may be applied for precise positioning and pairing through the precise positioning in a charging manipulator system based on an automatic connection device (ACD) such as an ACD-U (Underbody) type or an ACD-S (Side) type.

An on-board vehicle power supply circuit mounted in the electric vehicle 10 may include the battery 12 as a load.

The power reception pad/device 11 mounted in the electric vehicle 10 may receive power through a secondary coil and may transfer the power to the battery 12.

An electric vehicle charging station is illustrated as a part of the EVSE for supplying power to the electric vehicle 10. The charging station is electrically connected to an ACD station, and power may be transmitted to the vehicle through a connector of the ACD station.

A primary coil on a side of the EVSE and a secondary coil on a side of the electric vehicle 10 may be adjacent to form inductive coupling.

In an ACD-U type electric vehicle wireless charging system according to an exemplary embodiment of the present disclosure, the ACD station is positioned below the electric vehicle 10, and such a structure may be collectively referred to as an ACD-U type.

According to exemplary embodiments, a connector on a side of the ACD may be controlled to protrude from the station and approach a vehicle side. The connector may be connected and controlled by a robot arm.

According to exemplary embodiments, a connector on a side of the vehicle may be controlled to protrude from the vehicle side and approach the connector on the side of the ACD. The connector on the side of the vehicle may be connected and controlled by a robot arm.

In an ACD-S type electric vehicle wireless charging system according to an exemplary embodiment of the present disclosure, the ACD station is positioned beside the electric vehicle 10, and such a structure may be collectively referred to as an ACD-S type.

According to exemplary embodiments, a connector on a side of the ACD may be controlled to protrude from the station and approach a vehicle side. The connector may be connected and controlled by a robot arm.

According to exemplary embodiments, a connector on a side of the vehicle may be controlled to protrude from the vehicle side and approach the connector on the side of the ACD. The connector on the side of the vehicle may be connected and controlled by a robot arm.

As a coordinate system applicable to an exemplary embodiment of the present disclosure, an x-axis, y-axis, and z-axis coordinate system defined in SAE J2954 may be referred to.

In exemplary embodiments of the present disclosure, in a right-handed coordinate system, a front direction or a longitudinal direction of a vehicle may be defined as a +/-X-axis direction. In addition, a driver side for a left hand side vehicle or a left-right direction of the vehicle may be defined as a +/-Y-axis direction. In addition, an upper direction or an up-down direction of the vehicle may be defined as a Z-axis.

In the power transfer system of FIG. 1, the power transmission pad 21 and/or the power reception pad 11 may include a power circuit for power supply.

Also, in exemplary embodiments corresponding to a wired power transfer device, a power circuit may be respectively included in a power transmission side and a power reception side.

A DC/AC conversion circuit, a compensation circuit, etc. may be included between the grid 30 side and the power transmission pad 21 or a wired power transmission device.

A rectifying circuit, an AC/DC conversion circuit, a compensation circuit, etc. may be included between the power reception pad 11 or a wired power reception device and the battery 12.

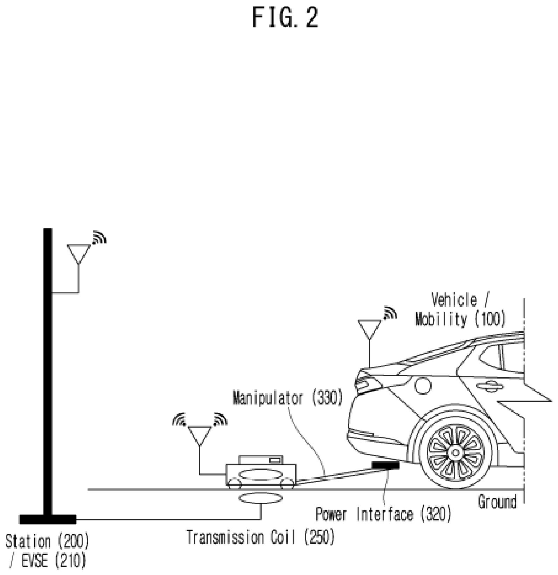

FIG. 2 is a diagram conceptually illustrating a process in which a charging robot 300 according to an exemplary embodiment of the present disclosure operates to charge a vehicle or mobility 100 and a charging infrastructure in which the process is performed.

In FIG. 2, even when "electric vehicle" or "vehicle" is described for convenience of description, the present disclosure may be applied to various types of electric mobility capable of traveling using electric energy. The electric mobility may refer to not only mobility traveling only by electric energy but also various types of hybrid electric mobility capable of using another energy source together.

In addition, in the following exemplary embodiments of the present disclosure, a counterpart charged by the charging robot 300 may refer to a chargeable mobility or device.

Even when various electric mobility, chargeable mobility, or devices are targeted, expressions such as EVSE may conventionally refer to a device supplying electric energy, and expressions such as EVCC may refer to a controller performing electronic communication and control in the electric mobility, the chargeable mobility, or the device.

According to exemplary embodiments of the present disclosure, a robotic charging system for charging an electric vehicle, a chargeable mobility 100 or device (hereinafter, "mobility"), may include an electric vehicle supply equipment (EVSE) 210 or a primary device of a station 200, and a charging robot 300 configured to move to a target location for charging the mobility 100 in a state in which the charging robot is separated from the EVSE 210 or the primary device.

According to exemplary embodiments of the present disclosure, in the robotic charging system, the charging robot 300 may include a traveling module, a manipulator 330 configured to operate such that a first power interface 320 of the charging robot 300 and a second power interface of the mobility 100 are docked or coupled at the target location in order to charge the mobility 100, and a controller configured to control one or more operations of the first power interface 320, the traveling module, or the manipulator 330.

According to exemplary embodiments of the present disclosure, in the robotic charging system, the manipulator 330 may include one or more of a sidearm mechanism configured to dock or couple with the second power interface at a side of the chargeable mobility 100 or device, an underbody mechanism configured to dock or couple with the second power interface under the chargeable mobility 100 or device, or a roof or pantograph mechanism configured to dock or couple with the second power interface above the chargeable mobility 100 or device.

The first power interface 320 of the charging robot 300 may be implemented to support wired power transfer, or may be implemented to support wireless power transfer.

In exemplary embodiments supporting wired power transfer, the first power interface 320 of the charging robot 300 may be docked with the second power interface of the mobility 100 to provide direct electrical connection.

In exemplary embodiments supporting wireless power transfer, the first power interface 320 of the charging robot 300 may be magnetically coupled with the second power interface of the mobility 100 to provide inductive power transfer (IPT).

In alternative exemplary embodiments of wireless power transfer, wireless power transfer by capacitive coupling may also be provided.

According to exemplary embodiments of the present disclosure, in the robotic charging system, the charging robot 300 may provide a bidirectional charging function including a grid-to-vehicle (G2V) charging mode for supplying power from the first power interface 320 to the second power interface, and a vehicle-to-grid (V2G) charging mode for receiving power from the second power interface to the first power interface 320.

In the G2V charging mode, power may be transmitted from the grid 30 to the mobility 100. In the V2G charging mode, power may be transmitted from the mobility 100 to the grid 30.

According to exemplary embodiments of the present disclosure, the robotic charging system may further include, as a charging infrastructure, a ground power supply device disposed on a ground to supply power to the charging robot 300 in a state in which the charging robot 300 has moved to the target location. The ground power supply device disposed on the ground may be the transmission coil 250 shown in FIG. 2. In this exemplary embodiment, the ground power supply device may support wireless power transfer (WPT). The charging robot 300 may receive energy wirelessly from the transmission coil 250 embedded in or disposed on the ground in a state in which the charging robot 300 is docked or coupled with the mobility 100.

According to exemplary embodiments of the present disclosure, the robotic charging system may further include, as a charging infrastructure, a marker disposed on the ground to indicate a location of the ground power supply device. For example, in order to indicate a location of the transmission coil 250 embedded in the ground, the marker may be disposed on the ground in which the transmission coil 250 is embedded. The marker may be implemented as, for example, a QR code or an image or shape having a unique pattern.

The charging robot 300 may search for the marker disposed at the location of the transmission coil 250 using a camera or an image sensor, and so on in order to move to the location of the transmission coil 250.

The charging robot 300 may use the location marker of the transmission coil 250 in order to perform precise positioning at the target location.

After arriving at the target location, the charging robot 300 may receive power from the ground power supply device such as the transmission coil 250 disposed on the ground.

While supplying power to the mobility 100 in a wired or wireless manner through the first power interface 320, the charging robot 300 may receive power from the ground power supply device such as the transmission coil 250 disposed on the ground.

Conventional electric vehicle charging is implemented in a manner in which a user parks a vehicle in a space in which a charger is installed and then directly connects a cable of the charger to the vehicle to perform charging. Recently, as a charging capacity gradually increases for ultra-fast charging, a cable weight is also becoming heavy, and a safety problem due to high output is emerging. In addition, when an unmanned vehicle such as a robot taxi based on autonomous driving appears in the future, such a wired cable-based manual charging method may cause great inconvenience to a user.

The robotic charging system of the present disclosure can solve a problem of insufficient charging infrastructure because a vehicle, mobility, or device can be charged anytime and anywhere as long as only a mobile robot capable of autonomous driving is present, and can also secure safety and reliability for high-output charging. In addition, when an unmanned vehicle capable of autonomous driving appears in the future, charging by the mobile robot is possible anytime and anywhere without intervention of an external user, and thus the robotic charging system can greatly help improve user convenience and vehicle commerciality.

The present disclosure relates to a robotic charging system for an electric vehicle based on a mobile robot capable of autonomous driving (AMR: Autonomous Mobile Robot), and an example of the configuration is shown in FIG. 2. In FIG. 2, an unmanned charging solution that does not require intervention of an external user may be implemented using the charging robot 300 in which the ACD-U (Automatic Connection Device - Underbody)-based first power interface 320 and manipulator 330 are installed and the mobility 100 in which an ACD-U-based device is also installed.

A separate automatic connection device (ACD-U Vehicle Unit) is mounted on a lower portion of the vehicle on a side of the mobility 100, and a wireless communication controller (EVCC) for communication with the charging robot 300 is embedded in the vehicle. In a body of the robot 300, the first power interface 320 and the manipulator 330 are installed as an automatic connection device (ACD-U Robot Unit) on a side of the robot 300, and are normally hidden in the body, and protrude outward during charging of the mobility 100, move in a space on X-Y-Z axes, and then are physically automatically connected to an inlet of the automatic connection device (ACD-U Vehicle Unit) on the side of the mobility 100 through a charging connector connectable in 360-degree directions, so that wired power transfer may be provided.

In alternative exemplary embodiments of the present disclosure, the automatic connection device between the charging robot 300 and the mobility 100 may be one of ACD-S, ACD-P, or ACD-R. In addition, in alternative exemplary embodiments of the present disclosure, a charging connection between the charging robot 300 and the mobility 100 may be wireless power transfer (WPT) such as IPT.

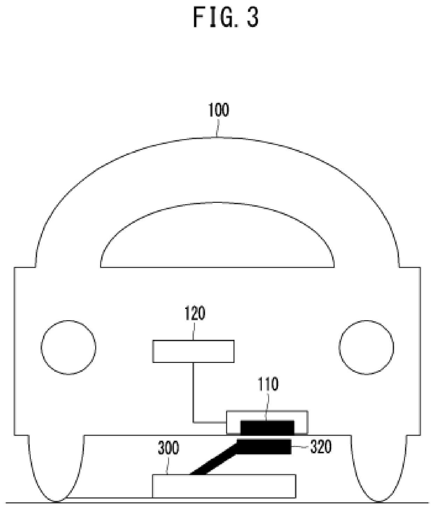

FIG. 3 is a diagram conceptually illustrating an example of an ACD-U-based interface in which the charging robot 300 according to an exemplary embodiment of the present disclosure operates to charge a vehicle or mobility 100.

As shown in FIG. 3, the first interface 320 may be an ACD-U-based interface.

The first interface 320 is positioned under the mobility 100, and the first interface 320 may approach the second interface 110 of the mobility 100 by operation of the manipulator. The first interface 320 and the second interface 110 may provide bidirectional power transfer in a wired manner by docking, or may be coupled to provide bidirectional power transfer wirelessly. The second interface 110 may be connected to the battery 120 to transfer power to the battery 120 (G2V mode), or may receive power from the battery 120 and transfer the power to the first interface 320 (V2G mode).

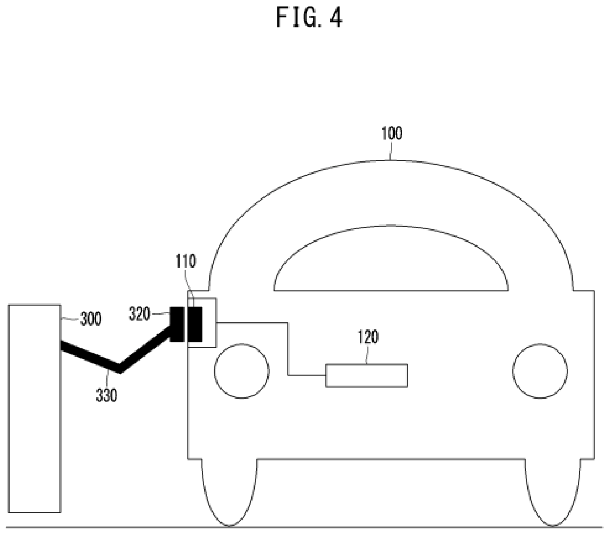

FIG. 4 is a diagram conceptually illustrating an example of an ACD-S-based interface in which the charging robot 300 according to an exemplary embodiment of the present disclosure operates to charge a vehicle or mobility 100.

As shown in FIG. 4, the first interface 320 may be an ACD-S-based interface.

The first interface 320 is positioned on a side surface of the mobility 100, and the first interface 320 may approach the second interface 110 of the mobility 100 by operation of the manipulator 330. The first interface 320 and the second interface 110 may provide bidirectional power transfer in a wired manner by docking, or may be coupled to provide bidirectional power transfer wirelessly. The second interface 110 may be connected to the battery 120 to transfer power to the battery 120 (G2V mode), or may receive power from the battery 120 and transfer the power to the first interface 320 (V2G mode).

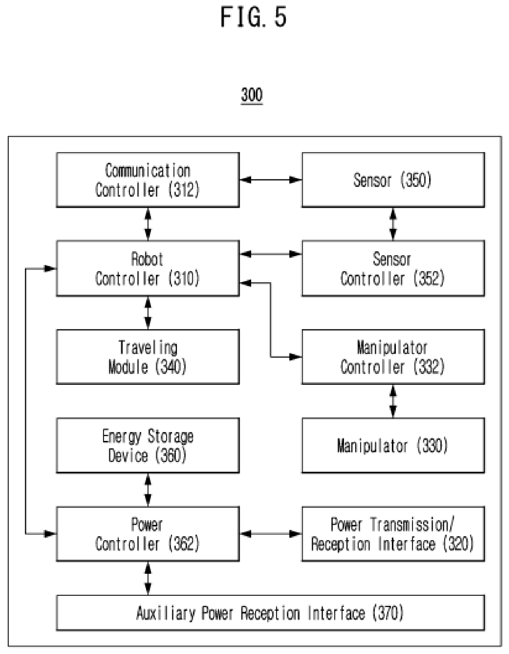

FIG. 5 is a block diagram conceptually illustrating a system structure of a charging robot according to an exemplary embodiment of the present disclosure.

According to an exemplary embodiment of the present disclosure, a charging robot 300 for charging an electric vehicle, a chargeable mobility 100 or device (hereinafter, "mobility") may include a first power interface 320 configured to supply power to a second power interface 110 on a side of the mobility 100; a traveling module 340 configured to operate such that the charging robot 300 moves to a target location for charging the mobility 100 in a state in which the charging robot 300 is separated from an electric vehicle supply equipment (EVSE, Electric Vehicle Supply Equipment) or a primary device of a station; a manipulator 330 configured to operate such that the first power interface 320 and the second power interface 110 are docked or coupled at the target location in order to charge the mobility 100; and a controller 310 configured to control one or more operations of the first power interface 320, the traveling module 340, or the manipulator 330.

The controller 310 may control one or more operations of the first power interface 320, the traveling module 340, or the manipulator 330 by cooperating with a communication controller 312, a manipulator controller 332, a sensor controller 352, or a power controller 362. Alternatively, the controller 310 may control one or more operations of the first power interface 320, the traveling module 340, or the manipulator 330 by controlling the communication controller 312, the manipulator controller 332, the sensor controller 352, or the power controller 362.

The first power interface 320 may be an interface that supports a bidirectional power transfer function and may be an interface having both a transmission function and a reception function.

According to exemplary embodiments of the present disclosure, in the charging robot 300 for charging the mobility 100, the manipulator 330 may include one or more of a sidearm mechanism configured to dock or couple with the second power interface 110 at a side of the chargeable mobility 100 or device, an underbody mechanism configured to dock or couple with the second power interface 110 under the chargeable mobility 100 or device, or a roof or pantograph mechanism configured to dock or couple with the second power interface 110 above the chargeable mobility 100 or device.

The traveling module 340 may operate, under control of the controller 310, such that the charging robot 300 moves to the target location through autonomous driving.

The first power interface 320 may provide a bidirectional charging function including a grid-to-vehicle (G2V) charging mode for supplying power to the second power interface 110, and a vehicle-to-grid (V2G) charging mode for receiving power from the second power interface 110.

According to exemplary embodiments of the present disclosure, the charging robot 300 for charging the mobility 100 may further include an energy storage device 360. The controller 310 may store power supplied from the EVSE 210 or the primary device of the station 200 in the energy storage device in a state in which the charging robot 300 is docked or coupled with the EVSE 210 or the primary device. The controller 310 may control the first power interface 320 and the energy storage device 360 such that power is supplied from the energy storage device 360 to the second power interface 110 through the first power interface 320 in a state in which the charging robot 300 has moved to the target location.

According to exemplary embodiments of the present disclosure, the charging robot 300 for charging the mobility 100 may further include an energy storage device 360; and an auxiliary power reception interface 370 as a third power interface configured to receive power from a ground power supply device or a transmission coil 250 disposed on a ground and transfer the power to the energy storage device 360 in a state in which the charging robot 300 has moved to the target location.

In the exemplary embodiments, the ground power supply device or the transmission coil 250 may support wireless power transfer (WPT). The charging robot 300 may receive energy wirelessly from the transmission coil 250 embedded in or disposed on the ground in a state in which the charging robot 300 is docked or coupled with the mobility 100.

The controller 310 may control the first power interface 320 and the third power interface such that power is transmitted to the second power interface 110 through the first power interface 320 while power is received from the ground power supply device through the third power interface.

The controller 310 may obtain a location of the ground power supply device such that the third power interface is coupled with the ground power supply device, and may control the third power interface such that the third power interface is aligned with the location of the ground power supply device.

The charging robot 300 may search for the marker disposed at the location of the transmission coil 250 using a camera or an image sensor, and so on in order to move to the location of the transmission coil 250.

After arriving at the target location, the charging robot 300 may receive power from the ground power supply device such as the transmission coil 250 disposed on the ground.

While supplying power to the mobility 100 in a wired or wireless manner through the first power interface 320, the charging robot 300 may receive power from the ground power supply device such as the transmission coil 250 disposed on the ground.

According to exemplary embodiments of the present disclosure, in the charging robot 300 for charging the mobility 100, the controller 310 may control one or more of selection of the charging robot 300, movement of the charging robot 300 to the target location, or power supply through the first power interface 320 based on an input of a user.

In the robotic charging system according to exemplary embodiments of the present disclosure, the robotic charging system may also be controlled by a user. The user may remotely control an operation or function of the mobility 100 by interworking with a server through a dedicated smartphone app or an IVI of the mobility 100.

In alternative exemplary embodiments of the present disclosure, in the case of an unmanned vehicle, the vehicle may directly connect to the server, reserve a service, and perform an automatic charging process based on the reserved service.

Referring again to FIG. 5, the charging robot 300 may include a sensor 350 for autonomous driving and a sensor controller 352 that controls the sensor 350. The sensor 350 may include vision sensors such as a camera, a lidar sensor, a radar sensor, and so on.

The charging robot 300 may further include the communication controller 312 for communication with an outside. Between the charging robot 300 and the mobility 100, ISO 15118-8/20, which is an international standard for a charging communication protocol of electric mobility, may be applied, or a separate protocol may be applied.

The energy storage device 360 may include a high-voltage battery and/or a low-voltage battery. The high-voltage battery may be a module that stores electrical energy for bidirectional charging. The low-voltage battery may be a module that controls modules inside the charging robot 300 and stores electrical energy for driving the manipulator 330, the traveling module 340, and so on.

The power controller 362 may include a power circuit. The power circuit may include an isolated bidirectional DC/DC converter and a power output-side relay.

The charging robot 300 may further include an LDC (isolated low voltage DC/DC) and a motor controller for controlling or driving the traveling module 340 and/or the manipulator 330.

The charging robot 300 may perform a role like a charger of the related art with respect to the mobility 100 in the G2V charging mode.

In alternative exemplary embodiments of the present disclosure, a separate display may be installed on a side of the charging robot 300 to display a state of the charging robot 300.

In alternative exemplary embodiments of the present disclosure, an advertisement may also be displayed in real time by the display installed on the side of the charging robot 300. An operator of a charging service using an autonomous mobile robot may also generate separate revenue through the advertisement.

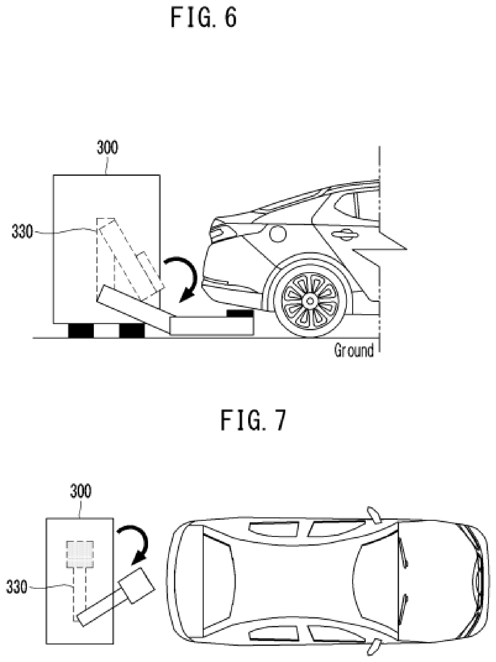

FIG. 6 is a diagram conceptually illustrating an example in which a manipulator of a charging robot according to an exemplary embodiment of the present disclosure operates to charge a vehicle or mobility.

FIG. 7 is a diagram conceptually illustrating an example in which a manipulator of a charging robot according to an exemplary embodiment of the present disclosure operates to charge a vehicle or mobility.

As shown in FIG. 6 and FIG. 7, an automatic connection device (ACD) on a side of the mobility 100 may close a door and maintain a second power interface therein during normal driving in which charging is not performed. During charging, a door of the ACD on the side of the mobility 100 may be opened, and the second power interface therein may be exposed to an outside.

The second power interface on the side of the mobility 100 may also be connected in 360-degree directions like the first power interface on the side of the charging robot 300. The second power interface on the side of the mobility 100 may be connected to a DC/DC converter or a high-voltage battery inside the mobility 100. Electrical energy transmitted from the charging robot 300 may be stored in the high-voltage battery inside the mobility 100.

The ACD of the charging robot 300 includes the manipulator 330 and the first power interface, and the manipulator 330 may close a door and be maintained in a state accommodated inside the charging robot 300 in a normal mode in which charging is not performed. During charging, the door of the charging robot 300 is opened, the manipulator 330 is exposed to the outside, and the manipulator 330 may operate to be docked or coupled with the second power interface on the side of the mobility 100.

As described above, ISO 15118-8/20 may be applied for wireless communication between the charging robot 300 and the mobility 100, or a separate protocol may be applied.

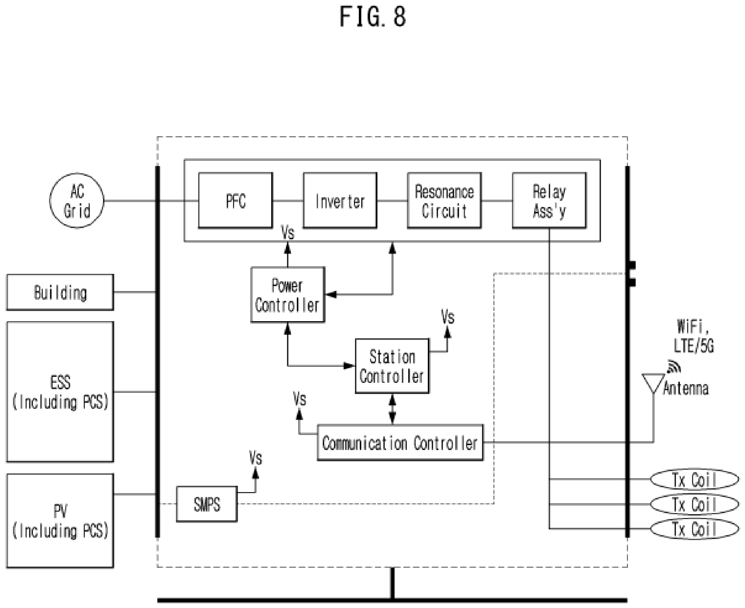

FIG. 8 is a block diagram conceptually illustrating a system structure of a charging station 200 for mutually cooperating with the charging robot 300 according to an exemplary embodiment of the present disclosure.

As shown in FIG. 8, the station 200 may include a station controller, a power controller, and a communication controller.

The station 200 may include a power circuit that receives and transfers power from a power system (grid).

The power circuit of the station 200 may include PFC, an inverter, a resonant circuit, a relay Ass'y, and so on. The power circuit of the station 200 may further include a bidirectional AC/DC converter and a bidirectional DC/DC converter.

The station 200 may further include a separate power module including an SMPS.

The communication controller is a component for communication between the charging robot 300 and the station 200, but in alternative exemplary embodiments of the present disclosure, the communication controller may also operate for communication between the mobility 100 and the station 200.

For communication between the station 200 and the charging robot 300, ISO 15118-8/20 used as a charging communication protocol between the mobility 100 and a charger may be applied like the communication technology between the charging robot 300 and the mobility 100 described above, and a separate protocol may also be used.

The charging robot 300 may perform a role like a vehicle receiving energy with respect to the station 200, and the station 200 may perform a role of a charger.

In addition, the station 200 may also perform communication with an external server in real time. Between the station 200 and the server, a conventional charging communication protocol between a charger and a CSMS such as OCPP may be applied, or a separate protocol may be applied.

The station 200 may always receive power from the power system (grid), and may support a bidirectional charging function. The bidirectional charging function of the station 200 may also be smartly operated in real time by interworking with a building and an ESS/PV.

When charging the mobility 100, the station 200 may transfer energy to the transmission coil 250. The charging robot 300 may receive energy from the transmission coil 250 and transfer energy to the mobility 100.

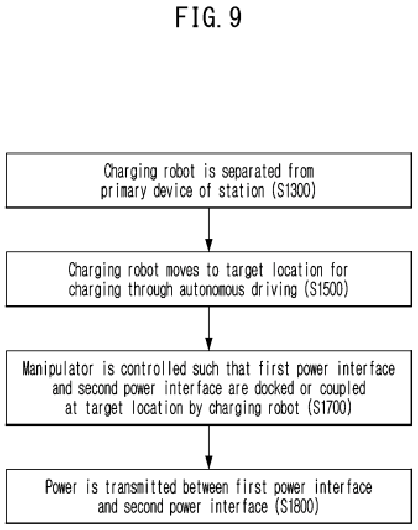

FIG. 9 is an operation flowchart illustrating a mobility charging method based on an autonomous mobile robot according to an exemplary embodiment of the present disclosure.

As shown in FIG. 9, a mobility charging method using a charging robot according to an exemplary embodiment of the present disclosure may include moving, by a charging robot including a first power interface capable of supplying power to a second power interface on a side of an electric vehicle, a chargeable mobility or device (hereinafter, "mobility"), to a target location for charging the mobility by traveling after being separated from an electric vehicle supply equipment (EVSE, Electric Vehicle Supply Equipment) or a primary device of a station (S1300) (S1500); controlling a manipulator of the charging robot such that the first power interface and the second power interface are docked or coupled in order for the charging robot to charge the mobility at the target location (S1700); and transmitting power between the first power interface and the second power interface (S1800).

In operation S1800, a bidirectional power transfer function may be supported, and according to a power transfer mode, power may be transmitted from the charging robot to the mobility, or conversely, power may be transmitted from the mobility to the charging robot.

In the mobility charging method using the charging robot according to an exemplary embodiment of the present disclosure, the manipulator may include one or more of a sidearm mechanism configured to dock or couple with the second power interface at a side of the chargeable mobility or device, an underbody mechanism configured to dock or couple with the second power interface under the chargeable mobility or device, or a roof or pantograph mechanism configured to dock or couple with the second power interface above the chargeable mobility or device.

In operation S1800, power may be transmitted in one of a grid-to-vehicle (G2V) charging mode for supplying power to the second power interface or a vehicle-to-grid (V2G) charging mode for receiving power from the second power interface.

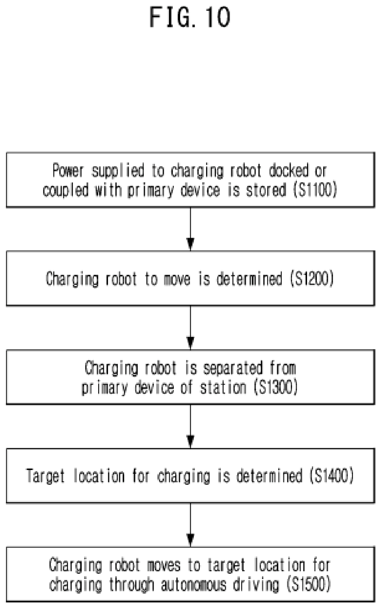

FIG. 10 is an operation flowchart illustrating in detail a part of a process of the mobility charging method based on the autonomous mobile robot according to an exemplary embodiment of the present disclosure.

As shown in FIG. 10, the mobility charging method using the charging robot according to an exemplary embodiment of the present disclosure may further include storing power supplied from the EVSE or the primary device of the station in a state in which the charging robot is docked or coupled with the EVSE or the primary device before the charging robot is separated from the EVSE or the primary device (S1300) (S1200).

The mobility charging method using the charging robot according to an exemplary embodiment of the present disclosure may further include determining a charging robot to move in order to charge the mobility before the charging robot is separated from the EVSE or the primary device (S1300) (S1200). Operation S1200 may be performed through mutual cooperation among a user of the mobility, the mobility, the station, the EVSE, the charging robot, and so on, or may be performed by any one of the user of the mobility, the mobility, the station, the EVSE, and the charging robot.

When the charging robot to move in order to charge the mobility is determined (S1200), the selected charging robot may be separated from the primary device of the station (S1300).

The charging robot may determine a target location for charging (S1400).

In FIG. 10, exemplary embodiments in which operation S1400 is performed between operation S1300 and operation S1500 are disclosed, but a part of operation S1400 may be performed after S1200 and before S1300, or may be performed after S1300. Another part of operation S1400 may be continuously performed while operation S1500 is performed.

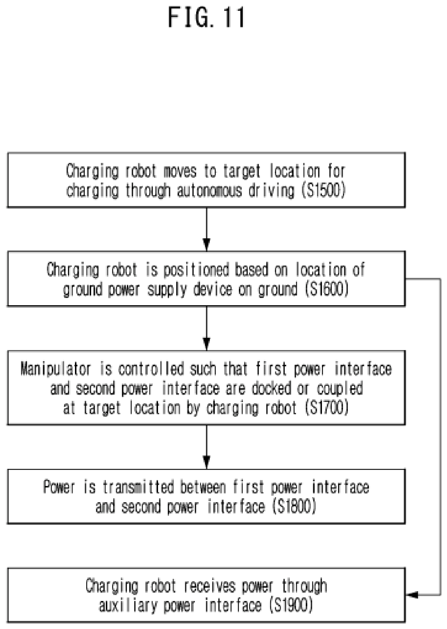

FIG. 11 is an operation flowchart illustrating in detail a part of a process of the mobility charging method based on the autonomous mobile robot according to an exemplary embodiment of the present disclosure.

As shown in FIG. 11, the mobility charging method using the charging robot according to an exemplary embodiment of the present disclosure may further include supplying power from a ground power supply device disposed on a ground to the charging robot in a state in which the charging robot has moved to the target location (S1500) (S1900).

In order to perform operation S1900, after the charging robot moves to the target location (S1500), the charging robot may be precisely positioned based on a location of the ground power supply device on the ground and/or a location of an auxiliary power interface in the charging robot (S1600).

After operation S1600, operation S1700 and operation S1800 may be performed.

Operation S1900 may be performed while operation S1800 is performed.

Referring to FIGS. 9 to 11 together, the mobility charging method using the charging robot according to an exemplary embodiment of the present disclosure may further include selecting the charging robot based on an input of a user. As exemplary embodiments of operation S1200, the charging robot may be selected based on the input of the user. The charging for the mobility may be requested based on the input of the user, and the charging robot may be selected based on specifications of the mobility, a charging capacity, a charging capability of the charging robot, and so on. A process of selecting the charging robot may be performed in response to the input of the user, and as described above, the user, the mobility, the station, the EVSE, and the charging robot may participate and cooperate in the process of selecting the charging robot.

In the mobility charging method using the charging robot according to an exemplary embodiment of the present disclosure, one or more of moving the charging robot to the target location (S1500), controlling the manipulator of the charging robot (S1700), and/or transmitting power between the first power interface and the second power interface (S1800) may be controlled based on the input of the user.

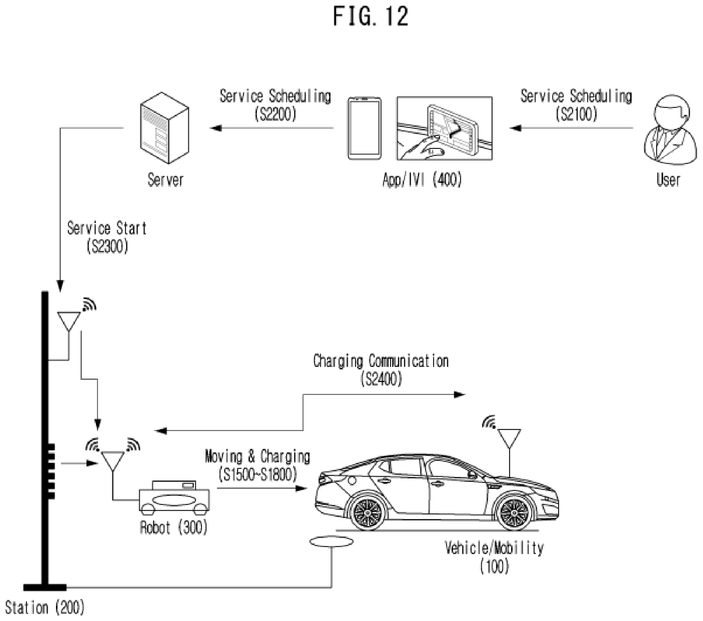

FIG. 12 is a diagram conceptually illustrating a service providing process for mobility charging based on an autonomous mobile robot according to an exemplary embodiment of the present disclosure.

As shown in FIG. 12, a service providing process is disclosed in exemplary embodiments in which the robotic charging system is controlled by an external user.

An operation of the robotic charging system may be remotely controlled by interworking with a server through a dedicated smartphone app or a mobility IVI 400 by the external user (S2100, S2200, S2300). In the case of an unmanned vehicle, the vehicle may directly access the server and reserve an automatic charging service.

The robotic charging system may not only charge the mobility 100, but also recover energy from the mobility 100 through an internal bidirectional power module. Through such a function, an owner of the mobility 100 may also obtain a separate incentive by charging the mobility 100 with inexpensive late-night electricity at home and then selling energy of the mobility 100 through the robotic charging system.

When a service operator operates an unmanned vehicle and the robotic charging system together, insufficient energy in the robot 300 may be supplied from the vehicle and stored in a battery connected to the station 200, or may be sent to a building or system power, or may charge another vehicle.

After a service starts based on the input of the user (S2300), the charging robot 300 may perform charging communication (S2400) with the mobility 100, and may supply energy to the mobility 100 (S1800) through moving to a target location for charging the mobility 100 (S1500), precise positioning (S1600), and manipulator control (S1700).

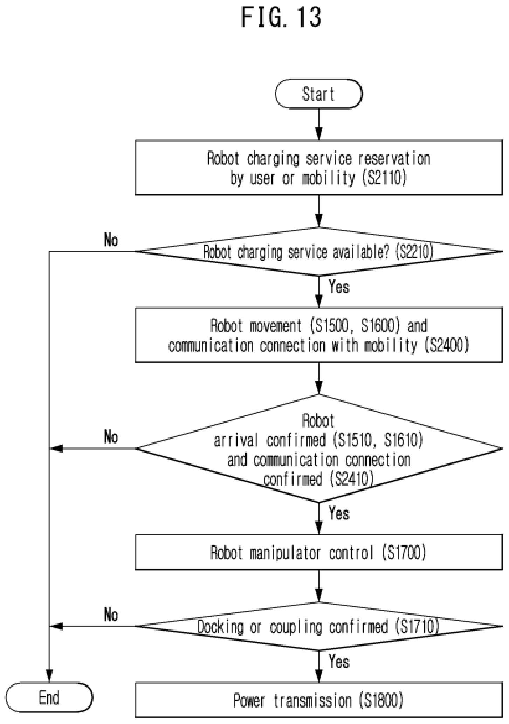

FIG. 13 is an operation flowchart conceptually illustrating a charging robot control process for mobility charging based on an autonomous mobile robot according to an exemplary embodiment of the present disclosure.

As shown in FIG. 13, in operation S2210, reserving a robot charging service by a user or a mobility is disclosed.

In relation to operation S2210, the user may reserve the robot charging service through a dedicated app or an IVI in the mobility after parking the mobility. In an unmanned vehicle, the vehicle may directly access a server, and a service may be reserved.

Service reservation information may include user information and mobility information (a mobility location, a mobility maximum voltage/current/power, a current SOC, a target SOC, a departure time, and so on).

Vehicle location information may be generated by the user directly selecting a vehicle location on a parking lot map through the dedicated app or the IVI.

In the unmanned vehicle, the vehicle may directly transmit parking location information to the server.

The service reservation information may be transmitted in an order of app/vehicle -> server -> station -> robot.

In checking whether the robot charging service is available (S2210), the robotic charging system may check whether the user is able to use the corresponding robot charging service. In operation S2210, matters such as determining whether the user has subscribed to the service and checking whether there is currently an idle robot capable of charging the corresponding vehicle may be checked.

In case that the user has not subscribed to the service, the service reservation process (S2110) may be reperformed after the service subscription is performed.

When there is currently no idle robot and the mobility may not be charged, a service available time may be notified to the user.

When the robotic charging system is unavailable, after service termination, service unavailability and/or the service termination may be notified to the user.

When the robot charging service is available, moving of the robot (S1500), positioning (S1600), and communication connection with the mobility (S2400) may be performed.

The robot may move based on mobility parking location information (S1500). In addition, communication connection (S2400) may also be performed based on the mobility parking location information.

At the time of first charging, communication may start as a new session.

The robot may be changed during charging. When charging continues using another robot after previous charging, a previous communication session may be maintained.

Relative position positioning between the robot and the mobility may be additionally performed. For example, relative position positioning between the robot and the mobility may be performed through auxiliary means such as a UWB module or an LF module between the robot and the mobility (for example, short-range communication means).

Moving of the robot (S1500), positioning (S1600), and communication connection with the mobility (S2400) may proceed to a next operation through checking robot arrival (S1510), checking positioning (S1610), and checking communication connection (S2410), respectively.

As a result of performing the relative position positioning, whether the robot has arrived at a position capable of docking or coupling with the vehicle may be checked (S1510, S1610).

When the robot is unable to move to the position capable of docking or coupling with the vehicle within a predetermined time, the fact that the service is terminated and/or a cause of the service termination may be notified to the user after the service is terminated.

Alternatively, also when communication connection between the robot and the mobility is impossible, after service termination, the service termination and/or a cause of the service termination may be notified to the user.

In operation S1700, movement of a robot arm and an interface on a side of the mobility (a wired connection inlet, a wireless power reception pad, and so on) may be docked or coupled.

For operation S1700, automatic authentication (PnC) based on secure communication (TLS) between the robot and the mobility may be performed.

For exchanging charging parameters between the robot and the mobility, a message including the charging parameters may be transmitted and received. The charging parameters may include a robot maximum charging voltage/current/power, available robot battery energy, and so on.

In ACD-U-based exemplary embodiments, precise positioning between an ACD-U interface of the robot and an ACD-U interface mounted on a lower portion of the mobility may be performed.

For example, precise positioning may be performed at a short distance between the ACD-U_Robot interface and the ACD-U_Vehicle interface using a permanent magnet, a Hall sensor, and so on.

Based on precise positioning values, the robot ACD-U_Robot interface and the mobility lower ACD-U_Vehicle interface may be docked or coupled. Upon connection for wired power transfer, the ACD-U_Robot connector and an inlet of the ACD-U_Vehicle may be docked.

In ACD-S-based exemplary embodiments, a vision sensor of the charging robot may also be utilized in order for the ACD-S interface of the robot to be docked or coupled with the ACD-S interface on a side of the mobility.

After operation S1700, checking whether docking or coupling is completed (S1710) may be performed.

For example, in exemplary embodiments of docking, physical connection between interfaces may be checked. In addition, whether normal docking is performed may be determined by detecting a Control Pilot signal.

Also, in exemplary embodiments of coupling, whether normal coupling is performed may be determined by detecting a Control Pilot signal between interfaces.

When docking or coupling fails, retry may be performed. The number of retries may be predetermined in the robotic charging system.

When the number of retries due to docking or coupling failure is exceeded, after service termination, the service termination and/or a cause of the service termination may be notified to the user.

When whether docking or coupling is completed is checked, power may be transmitted (S1800).

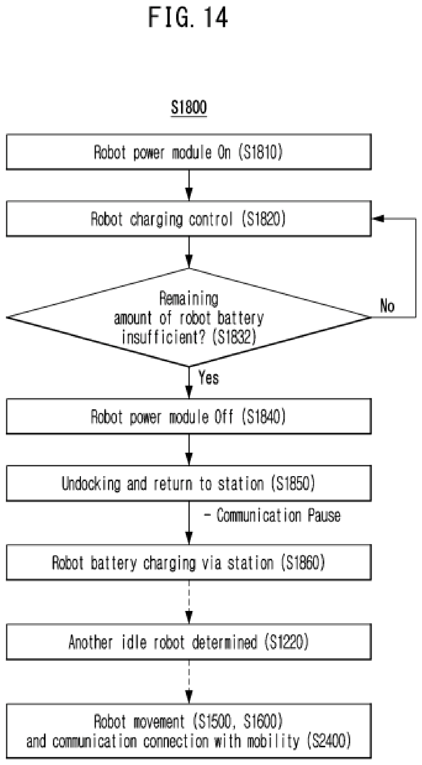

FIG. 14 is an operation flowchart illustrating in detail an exemplary embodiment of a part S1800 of the process of FIG. 13.

As shown in FIG. 14, when docking or coupling is completed, turning on a robot power module may be performed (S1810). In operation S1810, cable check and pre-charge may be performed according to a request of the mobility.

After operation S1810, robot charging control may be performed (S1820).

As a part of operation S1820, a process of checking a remaining amount of a robot battery in real time may be further included.

In FIG. 14, in relation to operation S1820, whether the remaining amount of the robot battery is insufficient may be checked (S1832).

When the remaining amount of the robot battery is insufficient, the robot power module may be turned off (S1840). The robot power module may refer to a power circuit or an interface related to a high-voltage battery and related to a charging function of the robot.

When the remaining amount of the robot battery is insufficient, another idle robot (second robot) may replace an existing robot (first robot) and continue charging, and thus, the first robot may return to the station after undocking or decoupling (S1850).

Here, a communication session may be temporarily stopped.

After the first robot returns to the station (S1850), the battery of the first robot may be charged via the station (S1860).

Independently of operation S1860, a second robot different from the first robot among idle robots may be determined as a robot that will continue a charging service (S1220).

The second robot may replace the first robot and continue performing the charging service for the mobility. The communication session temporarily stopped in operation S1850 may be resumed. That is, the second robot may continue performing the charging service while maintaining the communication session initiated and then stopped by the first robot as it is.

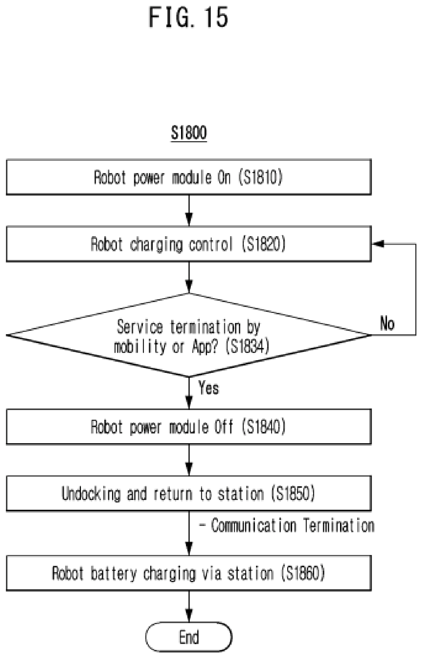

FIG. 15 is an operation flowchart illustrating in detail another exemplary embodiment of a part S1800 of the process of FIG. 13.

In FIG. 15, in relation to operation S1820, whether the service is terminated by the mobility or App may be checked (S1834).

When the service is terminated by the mobility or App, the robot power module may be turned off (S1840).

After the service is terminated, the robot may return to the station after undocking or decoupling (S1850).

Since the service is terminated, the communication session may be terminated.

After the robot returns to the station (S1850), the battery of the robot may be charged via the station (S1860).

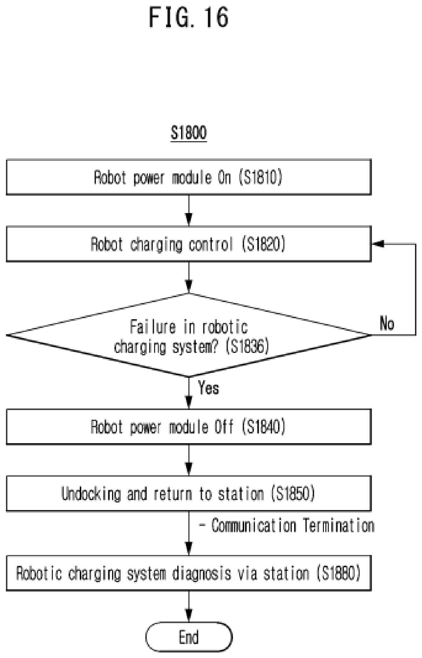

FIG. 16 is an operation flowchart illustrating in detail another exemplary embodiment of a part S1800 of the process of FIG. 13.

In FIG. 16, in relation to operation S1820, whether a failure of the robotic charging system has occurred may be checked (S1836).

When the failure of the robotic charging system is checked, the robot power module may be turned off (S1840).

After the robot power module is turned off, the robot may return to the station after undocking or decoupling (S1850).

Since the service is stopped, the communication session may be terminated.

After the robot returns to the station (S1850), the charging system of the robot may be diagnosed via the station (S1880).

In alternative exemplary embodiments of the present disclosure, another charging robot among idle robots may be determined, and the charging service may be resumed by a new charging robot.

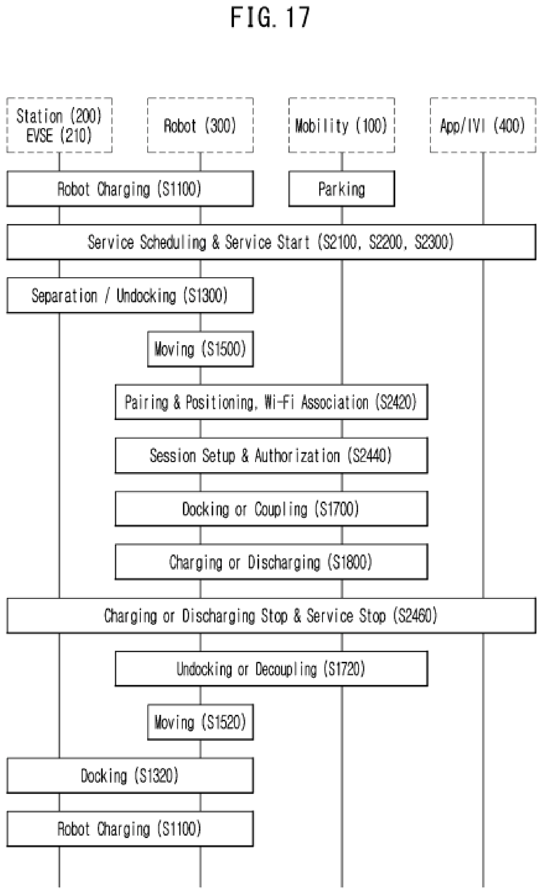

FIG. 17 is a diagram conceptually illustrating a communication sequence for mobility charging based on an autonomous mobile robot according to an exemplary embodiment of the present disclosure.

As shown in FIG. 17, while charging/discharging is performed between the station 200 and the robot 300 (S1100), the mobility may park in a parking space.

Service scheduling may be performed among the station 200, the robot 300, the mobility 100, and App/IVI 400, and a service may start (S2100, S2200, S2300).

The station 200 and the robot 300 may be undocked (S1300), and the robot 300 may move to a location of the mobility 100 (S1500).

Here, pairing, positioning, Wi-Fi Association, and so on may be performed between the robot 300 and the mobility 100 (S2420).

Session setup and authentication/authorization may be performed between the robot 300 and the mobility 100 (S2440).

Docking or coupling may be performed between the robot 300 and the mobility 100 (S1700).

Charging/discharging may be performed between the robot 300 and the mobility 100 (S1800).

Charging/discharging may be terminated, and the service may be terminated (S2460).

Undocking or decoupling may be performed between the robot 300 and the mobility 100 (S1720).

The robot 300 may leave and move away from the mobility 100 (S1520).

The robot 300 may be docked with the EVSE 210 of the station 200 (S1320).

The EVSE 210 of the station 200 may charge the docked robot 300 again (S1100).

In the exemplary embodiments of FIGS. 1 to 17, communication between the station and the robot may use a communication method between a charger/EVSE and a mobility of the related art.

In the exemplary embodiments of FIGS. 1 to 17, a charging process between the station and the robot may use a charging method between a charger/EVSE and a mobility of the related art.

The station may perform a role of a charger/EVSE of the related art, and the robot may perform a role of the mobility.

In the exemplary embodiments of FIGS. 1 to 17, communication between the robot and the mobility may use a communication method between a charger/EVSE and a mobility of the related art.

In the exemplary embodiments of FIGS. 1 to 17, a charging process between the robot and the mobility may use a charging method between a charger/EVSE and a mobility of the related art.

The robot may perform a role of a charger/EVSE of the related art.

In exemplary embodiments of the present disclosure, the robot may transfer power to the mobility using an interface receiving power from the station/primary device. The power interface of the robot may support a bidirectional charging function.

In another exemplary embodiments of the present disclosure, the robot may receive power from the station/primary device using a first type interface, and may transfer power to the mobility using a second type interface. For example, the first type interface may support wired power transfer, and the second type interface may support wireless power transfer. Each of the first type interface and/or the second type interface of the robot may support a bidirectional charging function.

According to exemplary embodiments of the present disclosure, an electric vehicle charging robot, a robotic charging system, and a charging method using the electric vehicle charging robot and the robotic charging system, which use an autonomous mobile robot (AMR, Autonomous Mobile Robot), may be implemented in a system for supplying power from a power supply device or an electric vehicle supply equipment (EVSE, Electric Vehicle Supply Equipment) to an electric vehicle.

According to exemplary embodiments of the present disclosure, an electric vehicle charging robot, a robotic charging system, and a charging method that are interworked with an electric vehicle equipped with an in-vehicle wireless communication controller (EVCC) may be implemented.

According to exemplary embodiments of the present disclosure, a charging infrastructure for an AMR-based electric vehicle charging robot, a robotic charging system, and a charging method may be implemented.

According to exemplary embodiments of the present disclosure, a communication procedure and a charging procedure for an AMR-based electric vehicle charging robot, a robotic charging system, and a charging method may be implemented.

Although omitted in the drawings in the exemplary embodiments of FIGS. 1 to 17, in order to perform one or more of operations such as requesting a robot charging service, identifying a target of the robot charging service, starting/terminating a charging service, identifying/selecting an automatic charging robot, obtaining a target location for charging, searching for the target location, moving a robot, controlling a manipulator, or controlling a charging process, a processor and a memory may be electronically connected to respective components, and operations of the respective components may be controlled or managed by the processor.

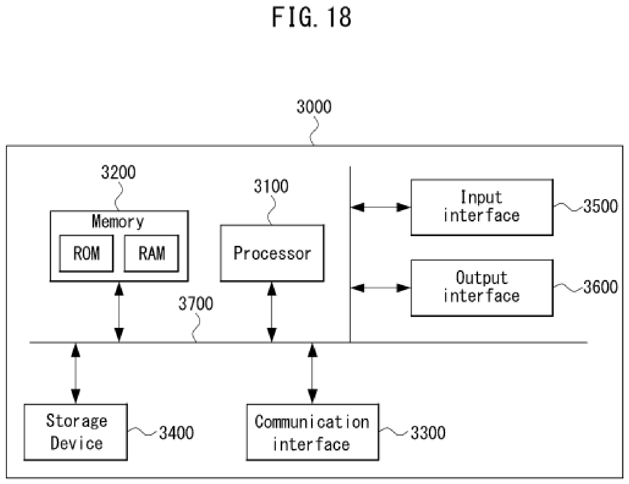

One or more of the operations such as requesting the robot charging service, identifying the target of the robot charging service, starting/terminating the charging service, identifying/selecting the automatic charging robot, obtaining the target location for charging, searching for the target location, moving the robot, controlling the manipulator, or controlling the charging process may be executed by a computing system 3000 of FIG. 18.

FIG. 18 is a block diagram illustrating a generalized configuration illustrating a computing system configuring or controlling one or more of a charging robot, a charging station, a primary device, a wired/wireless power transmission device, a wired/wireless power reception device, or a chargeable mobility or device according to an exemplary embodiment of the present disclosure.

In addition, as an AMR system and a control device for robot charging according to an exemplary embodiment of the present disclosure and a charging communication device for an ACD including an AMR, a generalized AMR, a control device in the AMR, a generalized ACD, a communication/communication control device included in the ACD, an SECC, an EVCC, a wireless LAN access point (AP) disposed for an EVSE, and a short-range communication device disposed in an electric vehicle or the ACD may be implemented using the computing system of FIG. 18.

The computing system 3000 according to exemplary embodiments of the present disclosure may include at least one processor 3100 and a memory 3200 storing instructions that cause the at least one processor 3100 to perform at least one operation. At least some operations of a method according to exemplary embodiments of the present disclosure may be performed by the at least one processor 3100 loading and executing the instructions from the memory 3200.

The processor 3100 may refer to a central processing unit (CPU), a graphics processing unit (GPU), or a dedicated processor by which methods according to exemplary embodiments of the present disclosure are performed.

Each of the memory 3200 and a storage device 3400 may include one or more of a volatile storage medium or a non-volatile storage medium. For example, the memory 3200 may include at least one of a read only memory (ROM) and a random access memory (RAM).

In addition, the computing system 3000 may include a communication interface 3300 that performs communication through a wired/wireless network.

In addition, the computing system 3000 may further include the storage device 3400, an input interface 3500, an output interface 3600, and so on.

In addition, respective components included in the computing system 3000 may be connected by a bus 3700 and may communicate with each other.

A device including the processor 3100 according to an exemplary embodiment of the present disclosure may be, for example, a communicable desktop computer, a laptop computer, a notebook, a smart phone, a tablet PC, a mobile phone, a smart watch, smart glasses, an e-book reader, a portable multimedia player (PMP), a portable game machine, a navigation device, a digital camera, a digital multimedia broadcasting (DMB) player, a digital audio recorder, a digital audio player, a digital video recorder, a digital video player, a personal digital assistant (PDA), and so on.

A device for obtaining information for power transfer and determining an item for a power transfer service or determining an operation condition for power transfer according to an exemplary embodiment of the present disclosure may be installed on a side of a station, a robot, and/or a mobility in association with a charging system for the mobility, an electric vehicle supply equipment (EVSE), and/or a charging manipulator, and may include the processor 3100 that receives and executes at least one instruction from the memory 3200.

The processor 3100 of the charging robot for charging the electric vehicle according to an exemplary embodiment of the present disclosure may perform a method executed by a computing system or a controller of a robot including a charging manipulator.

An electric vehicle communication controller (EVCC) according to exemplary embodiments of the present disclosure is an EVCC disposed or mounted in an electric vehicle and associated with a secondary assembly receiving power from a primary assembly, and includes a processor 1100 that receives and executes at least one instruction from a memory.

A supply equipment communication controller (SECC) according to exemplary embodiments of the present disclosure is an SECC associated with a primary assembly transmitting power to electric mobility, and includes a processor 1100 that receives and executes at least one instruction from a memory.

Meanwhile, in exemplary embodiments of the present disclosure, a process of transmitting a request, message, or parameter for starting a communication protocol or a communication session in the protocol may be initially started by the charging robot, or may be started by any one of a station and/or a mobility.

In this case, it is obvious that a sender in one exemplary embodiment becomes a receiver in another exemplary embodiment and a receiver in one exemplary embodiment becomes a sender in another exemplary embodiment, and a request, message, or parameter for starting the communication protocol or the communication session in the protocol has substantially the same features in different exemplary embodiments.

Operations of a method according to exemplary embodiments of the present disclosure may be implemented as a computer-readable program or code on a computer-readable recording medium. The computer-readable recording medium includes all kinds of recording devices storing information readable by a computer system. In addition, the computer-readable recording medium may be distributed in computer systems connected through a network, and the computer-readable program or code may be stored and executed in a distributed manner.

In addition, the computer-readable recording medium may include hardware devices specially configured to store and perform program instructions, such as ROM, RAM, flash memory, and so on. The program instructions may include not only machine language code such as code generated by a compiler, but also high-level language code executable by a computer using an interpreter and so on.

Some aspects of the present disclosure have been described in the context of a device, but the description may also represent a description according to a corresponding method, and a block or device corresponds to a method operation or a feature of a method operation. Similarly, aspects described in the context of a method may also be represented as a corresponding block or item or a feature of a corresponding device. Some or all of the method operations may be performed by, or using, a hardware device such as, for example, a microprocessor, a programmable computer, or an electronic circuit. In some exemplary embodiments, one or more of the most important method operations may be performed by such a device.

In exemplary embodiments, a programmable logic device, for example, a field programmable gate array, may be used to perform some or all of functions of the methods described herein. In exemplary embodiments, a field-programmable gate array may operate together with a microprocessor for performing one of the methods described herein. In general, the methods are preferably performed by a certain hardware device.

Although the present disclosure has been described with reference to preferred exemplary embodiments of the present disclosure, those skilled in the art will understand that the present disclosure may be variously modified and changed without departing from the spirit and region of the present disclosure described in the claims below.

## Claims

1. A charging robot based on autonomous driving for charging a chargeable mobility or device, comprising:
a first power interface configured to supply power to a second power interface of the chargeable mobility or device;
a traveling module configured to operate such that the charging robot moves to a target location for charging the chargeable mobility or device in a state in which the charging robot is separated from a primary device of a station;
a manipulator configured to operate such that the first power interface and the second power interface are docked or coupled at the target location; and
a controller configured to control one or more operations of the first power interface, the traveling module, or the manipulator.

2. The charging robot of claim 1, wherein the manipulator includes one or more of a sidearm mechanism configured to dock or couple with the second power interface at a side of the chargeable mobility or device, an underbody mechanism configured to dock or couple with the second power interface under the chargeable mobility or device, or a roof or pantograph mechanism configured to dock or couple with the second power interface above the chargeable mobility or device.

3. The charging robot of claim 1, wherein the traveling module is configured to operate, under control of the controller, such that the charging robot moves to the target location through autonomous driving.

4. The charging robot of claim 1, wherein the first power interface provides a bidirectional charging function including a grid-to-vehicle (G2V) charging mode for supplying power to the second power interface, and a vehicle-to-grid (V2G) charging mode for receiving power from the second power interface.

5. The charging robot of claim 1, further comprising an energy storage device,
wherein the controller stores power supplied from the primary device of the station in the energy storage device in a state in which the charging robot is docked or coupled with the primary device, and controls the first power interface and the energy storage device such that power is supplied from the energy storage device to the second power interface through the first power interface in a state in which the charging robot has moved to the target location.

6. The charging robot of claim 1, further comprising:
an energy storage device; and
a third power interface configured to receive power from a ground power supply device disposed on a ground and to transfer the power to the energy storage device in a state in which the charging robot has moved to the target location.

7. The charging robot of claim 6, wherein the controller controls the first power interface and the third power interface such that power is transmitted to the second power interface through the first power interface while power is received from the ground power supply device through the third power interface.

8. The charging robot of claim 6, wherein the controller obtains a location of the ground power supply device such that the third power interface is coupled with the ground power supply device, and controls the third power interface such that the third power interface is aligned with the location of the ground power supply device.

9. The charging robot of claim 1, wherein the controller controls one or more of selection of the charging robot, movement of the charging robot to the target location, or power supply through the first power interface based on an input of a user.

10. A robotic charging system based on an autonomous mobile robot for charging a chargeable mobility or device, comprising:
a primary device of a station; and
a charging robot configured to move to a target location for charging the chargeable mobility or device in a state in which the charging robot is separated from the primary device,
wherein the charging robot comprises:
a traveling module;
a manipulator configured to operate such that a first power interface of the charging robot and a second power interface of the chargeable mobility or device are docked or coupled at the target location; and
a controller configured to control one or more operations of the first power interface, the traveling module, or the manipulator.

11. The robotic charging system of claim 10, wherein the manipulator includes one or more of a sidearm mechanism configured to dock or couple with the second power interface at a side of the chargeable mobility or device, an underbody mechanism configured to dock or couple with the second power interface under the chargeable mobility or device, or a roof or pantograph mechanism configured to dock or couple with the second power interface above the chargeable mobility or device.

12. The robotic charging system of claim 10, wherein the charging robot provides a bidirectional charging function including a grid-to-vehicle (G2V) charging mode for supplying power from the first power interface to the second power interface, and a vehicle-to-grid (V2G) charging mode for receiving power from the second power interface to the first power interface.

13. The robotic charging system of claim 10, further comprising:
a ground power supply device disposed on a ground to supply power to the charging robot in a state in which the charging robot has moved to the target location.

14. The robotic charging system of claim 13, further comprising:
a marker disposed on a ground to indicate a location of the ground power supply device.

15. A mobility charging method based on an autonomous mobile robot, comprising:
moving, by a charging robot including a first power interface configured to supply power to a second power interface of the chargeable mobility or device, to a target location for charging the chargeable mobility or device by traveling after being separated from a primary device of a station;
controlling a manipulator of the charging robot such that the first power interface and the second power interface are docked or coupled at the target location; and
transmitting power between the first power interface and the second power interface.

16. The mobility charging method of claim 15, wherein the manipulator includes one or more of a sidearm mechanism configured to dock or couple with the second power interface at a side of the chargeable mobility or device, an underbody mechanism configured to dock or couple with the second power interface under the chargeable mobility or device, or a roof or pantograph mechanism configured to dock or couple with the second power interface above the chargeable mobility or device.

17. The mobility charging method of claim 15, wherein, in the transmitting of the power between the first power interface and the second power interface, the power is transmitted in one of a grid-to-vehicle (G2V) charging mode for supplying power to the second power interface or a vehicle-to-grid (V2G) charging mode for receiving power from the second power interface.

18. The mobility charging method of claim 15, further comprising:
storing power supplied from the primary device of the station in a state in which the charging robot is docked or coupled with the primary device before the charging robot is separated from the primary device.

19. The mobility charging method of claim 15, further comprising:
supplying power from a ground power supply device disposed on a ground to the charging robot in a state in which the charging robot has moved to the target location.

20. The mobility charging method of claim 15, further comprising:
selecting the charging robot based on an input of a user,
wherein one or more of moving of the charging robot to the target location, controlling of the manipulator of the charging robot, or transmitting power between the first power interface and the second power interface is controlled based on the input of the user.
